# EUROPEAN PATENT SPECIFICATION

(11) **EP 2 698 220 B1**
(45) Date of publication and mention of the grant of the patent: **18.11.2015**
(21) Application number: 13192941.6
(22) Date of filing: 20.09.2012
(51) Int. Cl.: B23C 9/00, B25B 11/00, B23Q 3/08, B21D 25/02, B21D 37/16, B21D 53/92, B21D 11/02, B21D 53/78

(54) **method of manufacturing a structure with a high performance metal alloy**
Verfahren zur Herstellung einer Struktur mit einer Hochleistungsmetalllegierung
Procédé de fabrication d'une structure avec un alliage de métal hautes performances

(30) Priority: 14.10.2011 US 201161547156 P; 28.08.2012 US 201213596454
(43) Date of publication of application: 19.02.2014
(62) Divisional of application: 12185293.3
(73) Proprietor: Bell Helicopter Textron Inc., Fort Worth, TX 76101 (US)
(72) Inventor: Bishop, Stephen K, Dallas, TX Texas 75231 (US); Swenson, Stephen S, Weatherford, TX Texas 76087 (US); Wilson, Crystal L, Haslet, TX Texas 76052 (US); Lemond, Paulette D, Rowlett, TX Texas 75089 (US)
(74) Representative: Lawrence, John

(56) References cited:
- CN-U- 201 455 699
- JP-A- 2011 020 203
- KR-B1- 100 827 795
- US-A- 2 905 225
- US-A- 2 952 294
- US-A- 2 952 767
- US-A- 3 021 887
- US-A- 5 035 133
- US-A1- 2007 261 463
- US-B1- 6 764 258

## Description

### BACKGROUND

### Technical Field:

The present application relates to a method of manufacturing a structure. The method of the present application is particularly useful for manufacturing an aerodynamic structure for a rotor blade of an aircraft. Further, the method is particularly well suited for manufacturing with a high performance metal alloy, such as titanium.

### Description of Related Art:

In general, certain aircraft structures may require a high level of precision, as well as a plurality of complex manufacturing steps configured to achieve the requisite high level of precision. For example, it is well known that chemical milling is a manufacturing process commonly used to manufacture parts having complex contours and tapered surfaces. However, chemically milling has shortcomings, such as surfaces pitting, tolerance variation, labor intensive masking, material limitations, and toxic material risks, to name a few.

Further, it can be particularly desirable to use high performance metal alloys, such a titanium alloy, in aircraft structures due their high strength to weight ratios, and other qualities. However, the machining and forming of high performance metal alloys has proven particularly challenging.

Hence, there is a need for an improved manufacturing method that improves structure quality and accuracy, while also decreasing labor hours and part rework. Further, there is a need for a method of machining and forming a high performance metal alloy, such as titanium.

US patent 6,764,257 describes a positionable vacuum clamp system including a vacuum table and one or more positionable vacuum clamps which can be of various shapes to accommodate differently shaped workpieces.

### Description of the Drawings

The novel features believed characteristic of the method of the present application are set forth in the appended claims. However, the method itself and further objectives and advantages thereof, will best be understood by reference to the following detailed description when read in conjunction with the accompanying drawings, wherein:
**Figure 1** is a perspective view of an aircraft, according to an illustrative embodiment of the present application;
**Figure 2** is a cross-sectional view of a rotor blade, taken at section lines II-II in Figure 1, according to the illustrative embodiment of the present application;
**Figure 3** is a schematic view of a method of manufacturing, according to the illustrative embodiment of the present application;
**Figure 4** is a perspective view of a metal sheet, according to an illustrative embodiment of the present application;
**Figure 5** is a top view of a machined metal sheet, according to an illustrative embodiment of the present application;
**Figure 6** is a cross-sectional view of the machined metal sheet, taken at section lines VI-VI in Figure 5, according to the illustrative embodiment of the present application;
**Figure 7** is a cross-sectional view of a finished abrasion strip member, according to an illustrative embodiment of the present application;
**Figure 8** is a schematic block diagram of a system, according to an illustrative embodiment of the present application;
**Figure 9** is a schematic view of a method of machining a high performance metal alloy, according to the illustrative embodiment of the present application;
**Figure 10** is a top view of a vacuum fixture used in the method of machining a high performance metal alloy;
**Figure 11** is a perspective view of a heated mandrel for stretch forming a high performance metal alloy, according to an illustrative embodiment of the present application; and
**Figure 12** is a perspective view of a heated mandrel for stretch forming a high performance metal alloy, according to another illustrative embodiment of the present application.

### Description of the Preferred Embodiment

Illustrative embodiments of the method are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another.

Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, *etc*. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The present application includes a method for efficiently manufacturing structures having a complex surfaces and precision located features. For example, the method of the present application is particularly well suited for manufacturing a leading edge abrasion strip member of a rotor blade, the abrasion strip member having an exterior airfoil surface and an interior portion, each having precision located features. However, it should be fully appreciated that the method may be used to manufacture any variety of structures; for example, wing members, nose cones, tip-caps, and tail rotor blades, are examples of other structures that may be manufactured using the method and system of the present application.

Further, the method of the present application is particularly well suited for machining and forming a thin sheet of a high performance metal alloy, such as titanium. However, it should be appreciated that the method of the present application may also be used for machining and forming a thin metal of other materials, such as stainless steel, for example.

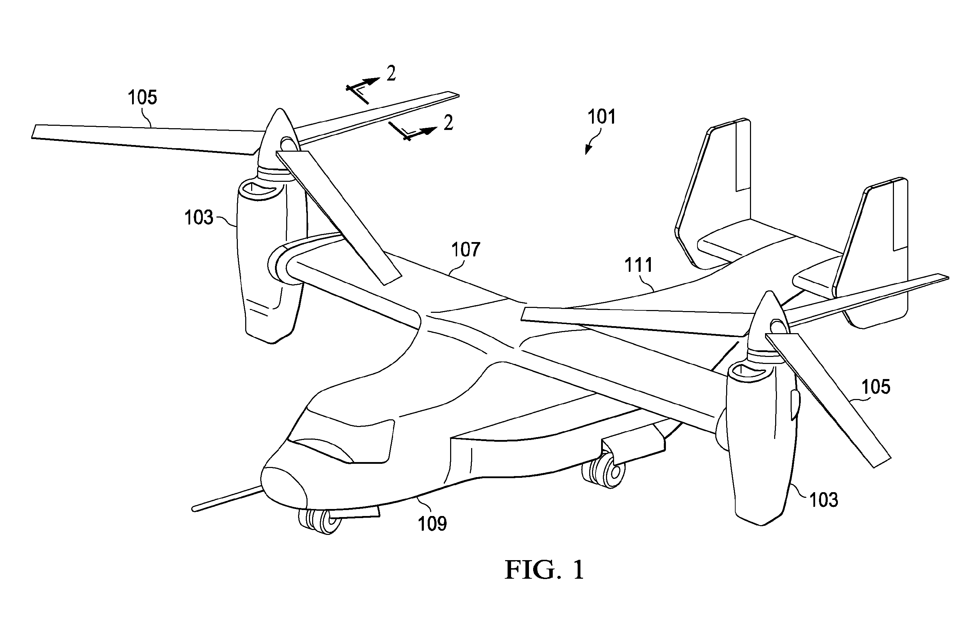

Referring to Figure 1, an aircraft 101 is illustrated. Aircraft 101 is a tilt-rotor aircraft having a nacelle 103 on each of end of a wing 107. Each nacelle 103 includes a rotor hub with a plurality of rotor blades 105. Aircraft 101 further includes a fuselage 109 and a tail member 111. Aircraft 101 is illustrated as a tilt-rotor aircraft for exemplary purposes only. It should be appreciated that the method and system of the present application may be used to manufacture structures on aircraft other than a tilt-rotor aircraft. Further, the method and system of the present application may be used to manufacture structures on non-aircraft vehicles and implementations.

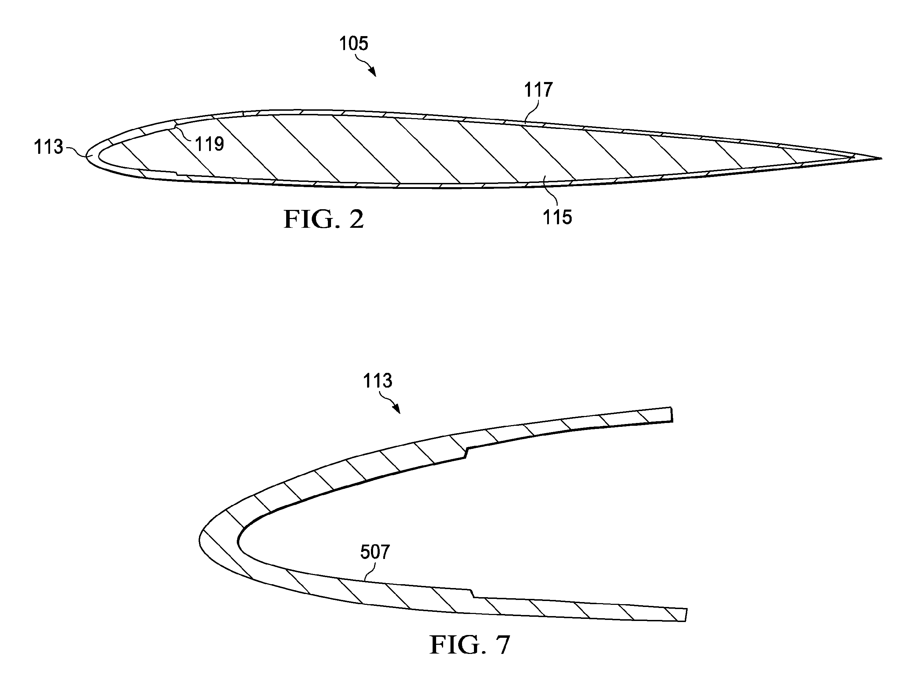

Referring now also to Figure 2, each rotor blade 105 includes an abrasion strip member 113 located on a leading edge portion of rotor blade 105. Rotor blade 105 further includes a body portion 115 and a skin member 117. As known in the art, body portion 115 can include any variety of structures, such as a spar, a composite core, a rib, to name a few. In the exemplary embodiment, abrasion strip member 113 includes dimensions that are critical to the structural integrity and performance of rotor blade 105. For example, the exterior airfoil shape and contour of abrasion strip member 113 is critical to the performance of rotor blade 105. Further, the inner shape and dimensions of abrasion strip member 113 can be critical for mating with body portion 115. For example, a location of a lip portion 119 can be critical for the proper structural mating with a spar in body portion 115.

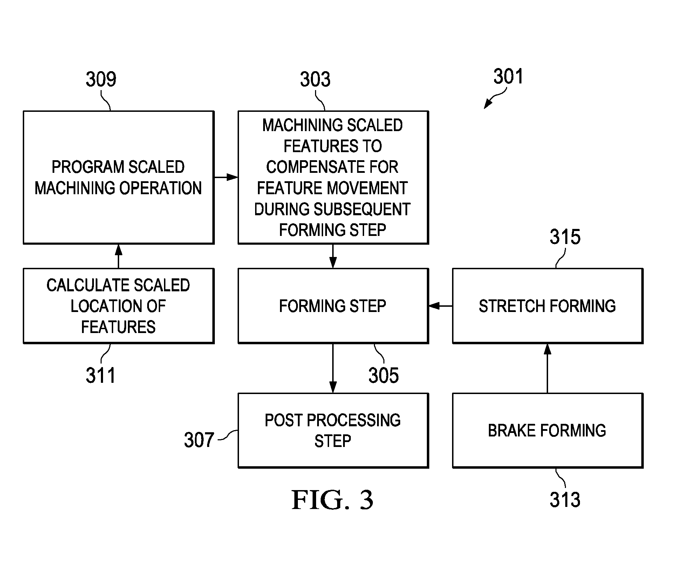

Referring now to Figure 3, a method 301 of manufacturing a part is schematically illustrated. For illustrative purposes, method 301 is illustrated with regard to manufacturing abrasion strip member 105. Method 301 includes a step 303 which involves machining scaled features with a size and location that compensates for feature movement during a subsequent forming step. Method 301 further includes a forming step 305 and a post processing step 307.

Step 303 includes a step 311 for calculating the scaled location of the machined features. In step 305, the part is formed through in a stretch forming and/or brake forming procedure that deforms and moves features of the part. As such, step 311 involves calculating the scaled size and location of the features so that the features will be in the proper location subsequent forming step 305. In the preferred embodiment, step 311 is performed by first machining the features in the part, then brake forming and stretch forming the part, then measuring the dimension dislocation and distortion of the machined features. Data pertaining to the measured dimension dislocation and distortion of the machined features is statistically evaluated to confirm relative uniformity of feature movement within context of allowable tolerances for both measurement capability and final part assembly. In an alternative embodiment, the calculation of the scaled size and location of the machined features is performed analytically, such that the scaled size and location of the machined features is determined by analytically predicting the dislocation and distortion of the machined features in the forming step 305.

Step 309 includes programming the machining tool with the data developed in step 311. It is well known in the art that machining tools, such as a CNC machining tool, are typically programmable with a set of instructions for machining the part. As such, step 309 includes programming the machining tool to machine the desired part features in accordance with the scaled feature size and location determined in step 311.

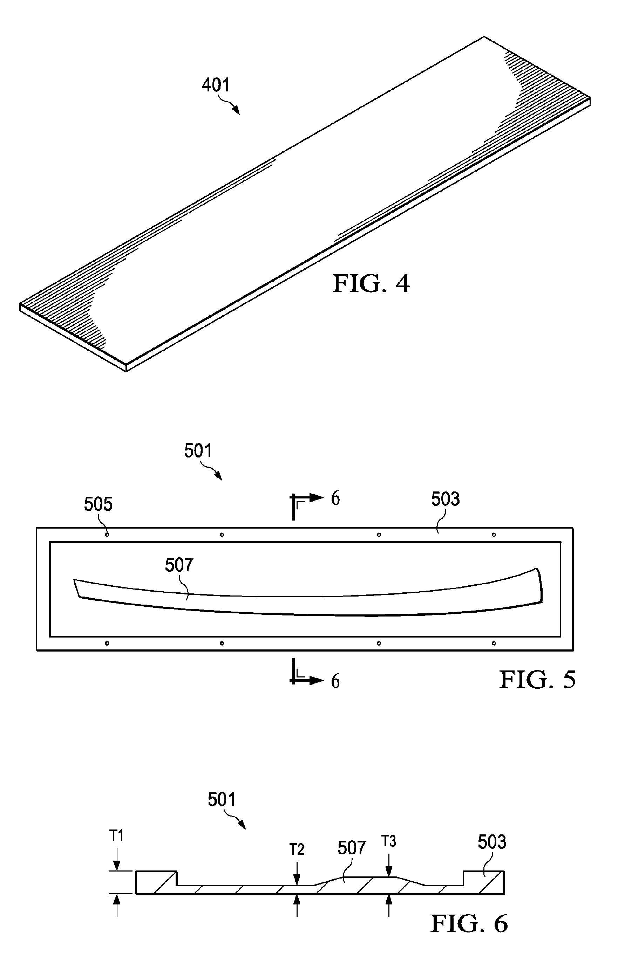

Referring now also to Figures 4-6, the machining of abrasion strip member 113 is illustrated. A blank sheet 401 is illustrated in Figure 4. The size and material of sheet 401 is implementation specific. However, method 301 is particularly well suited for using a high performance alloy, such as titanium. In such an embodiment, sheet 401 can be titanium (Ti 6-A1 4-V alloy) that is approximately 1.8 mm (0.070 inches) thick, 16 inches wide, and 192 inches long. However, it should be fully appreciated that other materials and sizes of sheet 401 may be used.

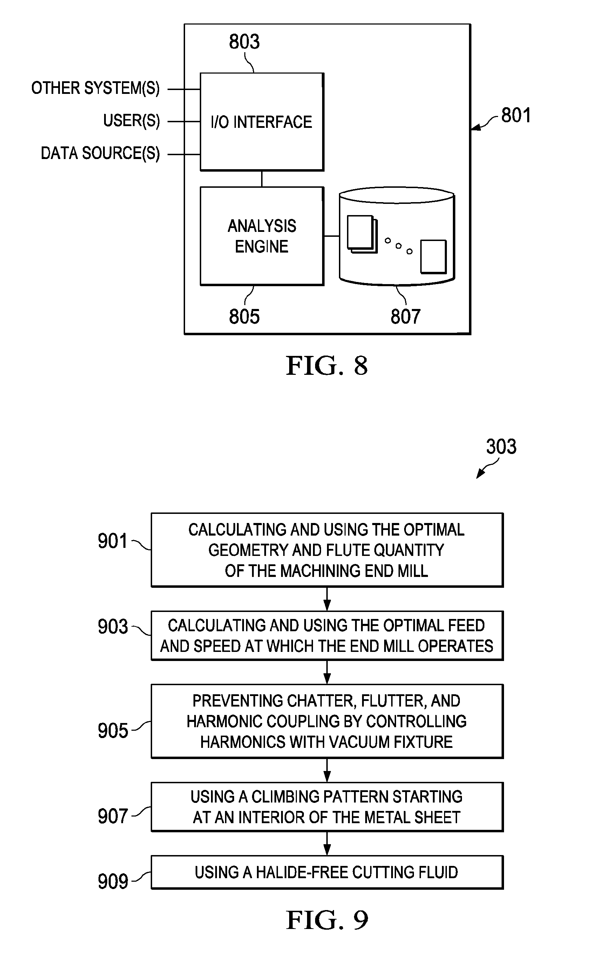

The preferred embodiment of step 303 is particularly well suited for the machining of a high performance alloy, such as a titanium alloy sheet. Referring briefly to Figure 9, it is preferred that steps 901 through 909 are used when step 303 involves machining a high performance alloy, such as a titanium alloy sheet. It should be appreciated that steps 901 through 909 may also be employed when machining sheet metal of other material compositions. Titanium sheet is typically difficult to machine with the accuracy to the make it practical for production aerospace applications. More specifically, historically it is been difficult to machine the desired dimensional surface and feature geometry in thin flat titanium sheet. Steps 901 through 909 can be used to achieve high yield, low cost, accurate, and reproducible machined thin sheet titanium. Still referring to Figure 9, step 901 includes calculating and using the optimal geometry and flute quantity of the machining end mill. An end mill having too few flutes is slow and results in a rough finish. An end mill having too many flutes can't throw out the metal chips fast enough. In the preferred embodiment, the end mill geometry and flute quantity is optimized. An exemplary end mill is marketed by M.A. Ford, which is a 5-flute end mill with a 2.29 mm (90 mil (thousandths of an inch)) radius, each flute being approximately 19 mm x 19 mm x 38 mm (0.75 inch x 0.75 inch x 1.5 inch). Step 903 includes calculating and using the optimal feed and speed at which the end mill operates. In an exemplary embodiment, the end mill operates at approximately 915 rpm (revolutions per minute), 9.5 mm per second (22.5 ipm (inches per minute)), and a chip load of 0.12 mm (4.9 mils). It should be appreciated that the end mill size, as well as the speed and feed at which the end mill is operated, is implementation specific. Steps 901 and 903 are not mutually exclusive, as such, end mill size and geometry should be optimized in accordance with the speed and feed at which the end mill operates in order to achieve the desired results.

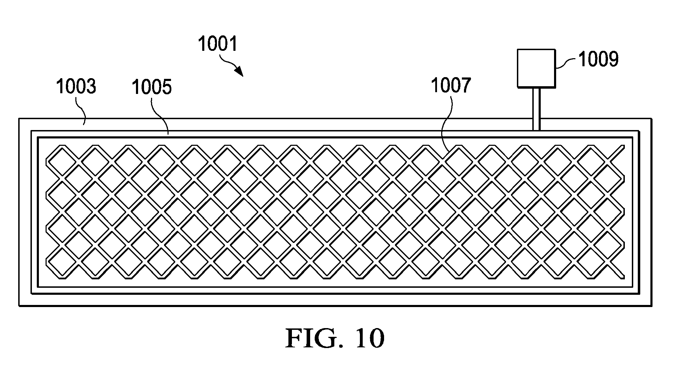

Step 905 includes preventing chatter, flutter, and harmonic coupling of the sheet metal during machining by using a vacuum fixture. Referring briefly to Figure 10, an exemplary vacuum fixture 1001 is illustrated. Vacuum fixture 1001 includes a base member 1003. Base member 1003 is preferably slightly larger than the sheet metal specimen, such as sheet 401, which the base member 1003 is configured to support. Base member 1003 can include an outer periphery seal 1005 that is operably associated with a vacuum pump 1009. Periphery seal 1005 can include a resilient seal member located in a recess. Base member 1003 further includes an inner grid 1007 of recessed seals. In the illustrative embodiment, inner grid 1007 includes a plurality of recessed seals located at 45 degree angles from normal, the seals being spaced apart approximately at 50 mm (2 inch) intervals. Vacuum fixture 1001 is configured to first secure and seal sheet 401 to base member 1003 by drawing and maintaining a vacuum in periphery seal 1005. Once sheet 401 is secured to base member 1003 via periphery seal 1005, a vacuum is drawn and maintained through inner grid 1107 so as to secure the inner portions of sheet 401 to base member 1003. Both the periphery seal 1005 and inner grid 1007 are configured to secure and locate sheet 401 at the desired flat state during machining so as to prevent chatter, flutter, and harmonic coupling of the sheet metal during machining.

Step 907 can include machining using a climbing cutting pattern starting at an interior of the metal sheet 401. A climbing cut refers to the rotational direction of the end mill in relation to the direction of travel of the end mill. Starting the milling process at in the inner portion of the sheet metal further reduces the chance of chatter, flutter, and harmonic coupling of the sheet metal. Further, the end mill is preferably operated at an approximate 70% step-over (overlap), such that the area of each pass of the end mill includes 30% of previously machined area.

Step 909 includes using a halide free cutting fluid during machining. An exemplary cutting fluid is S761-B, marketed by Ecocool. However, it should be appreciated that other cutting fluids may be used.

Referring to Figures 5 and 6, an example machined article 501 is illustrated. The scaled sizes and locations of the features are machined into machined article 501 while sheet 401 is in the flat state. In the illustrated embodiment, a frame 503 having a uniform thickness T1 of approximately 1.8 mm (0.070 inches) is preserved in sheet 401. Further, tooling holes 505 are located in the frame 503. Frame 503 and tooling holes 505 are configured to facilitate brake forming and stretch forming in the forming step 305, as discussed further herein. One example feature that is machined in a scaled location is a profile feature 507 having an approximately thickness T3 of 1.5 mm (0.059 inches). Feature 507 includes a periphery and thickness profile that is machined in a scaled location and thickness so that the scaled features move and distort into the desired position in the forming step 305. The periphery of feature 507 is contoured in relation to a centerline of the part because of a built-in twist of abrasion strip member 113. Alternative embodiments of abrasion strip member 113 may have zero twist, such that feature 507 is approximately centered and symmetric on a lengthwise centerline. Machined article 501 further includes a thin portion having a thickness T2 of approximately 0.6 mm (0.023 inches). The thin portion is machined down from the original sheet thickness to thickness T2. It should be appreciated that the ability to accurately machine features down to thicknesses of approximately 0.6 mm (0.023 inches), as illustrated in the exemplary embodiment, is particularly valuable in aerospace applications, and especially where it is desirably to subsequently form the machined article into a complex contour by a brake forming and/or a stretch forming process.

Referring again to Figure 3, method 301 further includes a forming step 305. In the preferred embodiment, step 305 includes a brake forming step 313 and a subsequent stretch forming step 315. However, it should be appreciated that step 305 may include any forming procedure that achieves dimension dislocation and distortion of the machined features. Brake forming step 313 includes using a brake die, the leading edge of the brake die being properly aligned with the machined article 501 with use of tooling pins inserted into tooling holes 505. The brake forming in step 305 bends machined article 501 around a brake die so as to establish the radius of abrasion strip member 113.

Next, stretch forming step 315 is performed with precision to reproducibly distort the part. The stretch forming is performed in a controlled manner so as to control the strain-rate applied to the metal. Lubrication can be used to prevent any sudden slippage or jerking that might otherwise happen if the part were to bind with the stretch forming tool. Further, tooling pins may be located in tooling holes 505 to assure positive location of the part during stretch forming. Preferably, the jaws of the stretch forming tool are attached to the previously braked formed machine article 501 at the frame 503 that is intentionally produced in the machining step 303. Preferably, frame 503 has a constant thickness and sufficient width to provide grip on the entire jaw-plate of the stretch form grips or jaws. Strain rate is controlled and consistent during the stretch forming so as to prevent the part from distorting in an undesired manner. Further, the over-press part of the stretch forming tool can also be controlled to form the part.

As further noted herein, method 301 is particularly useful for manufacturing with a high performance metal alloy, such as a titanium alloy sheet. When using a titanium alloy sheet, it is preferable that step 315 includes stretch forming with a heated mandrel, as discussed further below. Cold forming (room temperature) titanium has severe limitations due to the lack of ductility of titanium. Traditional hot forming requires large and expensive presses that heat the entire environment, and further require an etching process after the hot forming process. However, the method of the present application includes the realization that the apparent ductility of titanium can be improved if the metal is slightly heated above room temperature and the strain rate is controlled at a low enough rate to match the imparted plasticity resulting from the slight elevation of temperature.

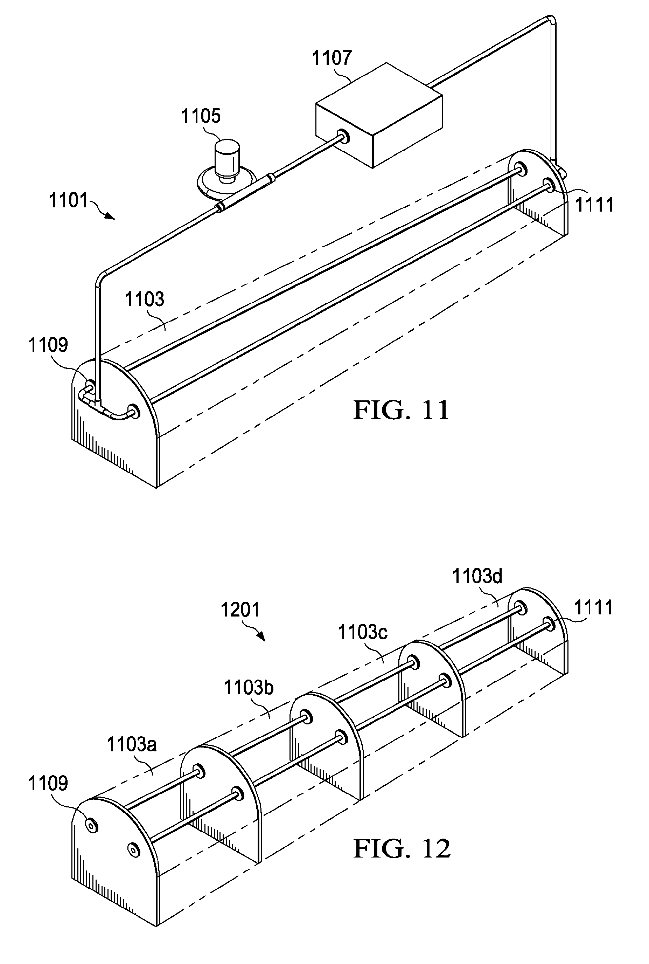

Referring now also to Figures 11 and 12, heated mandrels 1101 and 1201 are illustrated. Heated mandrel 1101 includes a solid portion 1103 having one or more fluid channels flowing from an inlet 1109 to an outlet 1101. A pump 1105 and a heat exchanger 1107 are configured to heat and circulate a hot working fluid, such as oil, through the solid portion 1103. Solid portion 1103 is preferably a steel or other heat conductive metal that is uniformly heated by the hot working fluid. The fluid channels in solid portion 1103 can be created by a drilling process, for example. Heated mandrel 1201 is similar in form and function to mandrel 1101, except heated mandrel 1201 is divided into sections 1103a-1103d for ease of manufacturing. Each section 1103a-1103d can be manufactured separately, then joined together to form a monolithic heated mandrel.

Heated mandrels 1101 and 1201 provide the ability to stretch form the metal sheet while minimizing strain at an atomic level, while erasing metal memory and partially stress relieving the metal sheet while it is being stretch formed. The metal sheet parts can be formed consistently with less risk of defect despite normal variations in material stock. The heating of the sheet metal by the heated mandrel minimizes the risk of non-uniform movement as the atoms more readily move (or dislocate) at elevated temperatures. The circulation of a working fluid in heated mandrel promotes temperature uniformity, not only in the mandrel, but also in the metal sheet part as it comes into contact with the heated mandrel. The precise temperature of the working fluid is implementation specific. However, in an exemplary embodiment, an oil is used as the working fluid, the oil being heated to approximately 177-204°C (350-400°F). It should be appreciated that other fluids and temperatures may be used. For example, a highly engineered heat transfer fluid having a temperature capacity of approximately 704.44°C (1300°F) may be used.

During stretch forming, the metal sheet is gradually stretched using a controlled strain rate while the heated mandrel transfers heat to the surface of the metal sheet, thereby relaxing the material to stimulate movement of the metal during stretching, while also improving the uniformity of metal movement, reducing metal-memory, and at least partially stress-relieving the material by preventing stress build-up during the stretch forming process.

It should be appreciated that heated mandrels 1101 and 1201 may be used in stretch forming sheet metal of other material compositions, other than titanium.

Method 301 further includes a post processing step 307 for upgrading and trimming the part. For example, step 307 includes trimming off frame 503 and touching up any surface finish blemishes. Step 307 can also include a dye-penetrant check to confirm the absence of cracks and pits in the part. Referring now also to Figure 7, abrasion strip member 113 is illustrated after frame 503 is trimmed off.

Referring now to Figure 8, a computer system 801 is schematically illustrated. System 801 is configured for performing one or more functions with regard to method 301, as well as other methods or processes described herein.

The system 801 can include an input/output (I/O) interface 803, an analysis engine 805, and a database 807. Alternative embodiments can combine or distribute the input/output (I/O) interface 803, analysis engine 805, and database 807, as desired. Embodiments of the system 801 can include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the exemplary embodiment is described in terms of a discrete machine, it should be appreciated that this description is non-limiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 803 provides a communication link between external users, systems, and data sources and components of the system 801. The I/O interface 803 can be configured for allowing one or more users to input information to the system 801 via any known input device. Examples can include a keyboard, mouse, touch screen, and/or any other desired input device. The I/O interface 803 can be configured for allowing one or more users to receive information output from the system 801 via any known output device. Examples can include a display monitor, a printer, and/or any other desired output device. The I/O interface 803 can be configured for allowing other systems to communicate with the system 801. For example, the I/O interface 803 can allow one or more remote computer(s) to access information, input information, and/or remotely instruct the system 801 to perform one or more of the tasks described herein. The I/O interface 803 can be configured for allowing communication with one or more remote data sources. For example, the I/O interface 803 can allow one or more remote data source(s) to access information, input information, and/or remotely instruct the system 801 to perform one or more of the tasks described herein.

The database 807 provides persistent data storage for system 801. While the term "database" is primarily used, a memory or other suitable data storage arrangement may provide the functionality of the database 807. In alternative embodiments, the database 807 can be integral to or separate from the system 801 and can operate on one or more computers. The database 807 preferably provides non-volatile data storage for any information suitable to support the operation of the system 801, including various types of data discussed further herein.

The analysis engine 805 can be configured for calculating and predicting the scaled location of machined features in step 311, programming the scaled machining operation in step 309, as well as other concepts disclosed herein. For example, the analysis engine 805 can be configured to analytically predict the dimension dislocation and distortion of the machined features during the forming procedures, thereby analytically calculating the scaled location of the features for machining. The analysis engine 805 can include various combinations of one or more processors, memories, and software components.

The method of the present application provide significant advantages, including: 1) creating the critical and complex surface features prior to brake forming and stretch forming; 2) calculating the scaled location of the machined features so that a subsequent forming step translates and deforms the machined features into the desired location; 3) providing a manufacturing method which does not require the chemical milling; 4) providing a method for machining high performance metal alloy, such as titanium; and 5) providing a heated mandrel for applying heat to a high performance metal alloy, such as titanium, during stretch forming.

It is apparent that a method having significant advantages has been described and illustrated.

The components of the system may be integrated or separated. Moreover, the operations of the system may be performed by more, fewer, or other components.

## Claims

1. A method of machining a feature in a metal sheet (401), the method comprising:
securing the metal sheet (401) with a vacuum fixture (1001) to reduce vibrations during machining, said vacuum fixture (1001) including a base member (1003) to support the metal sheet (401), the method being **characterised by**:
first drawing and maintaining a vacuum via an outer periphery seal (1005) of the base member (1003) to secure the metal sheet (401) to the base member (1003); and then
drawing and maintaining a vacuum through an inner grid (1007) of recessed seals of the base member (1003) to secure inner portions of the metal sheet (401) to the base member;
machining (303) at least one feature into the metal sheet (401) with an end mill starting at an interior of the metal sheet (401).

2. The method according to claim 1, wherein:
(i) the periphery seal (1005) is recessed into the base member (1003); or
(ii) the plurality of recessed seals (1007)are located at 45 degrees angles from normal.

3. The method according to any preceding claim, further comprising:
calculating an optimal flute quantity (901) and flute geometry of the end mill, and optionally or preferably wherein the flute quantity is approximately five.

4. The method according to any preceding claim, further comprising:
calculating (903) an optimal feed and an optimal speed at which the end mill is to operate in the step of machining (303) the at least one feature into the metal sheet, and optionally or preferably wherein:
(i) the optimal feed is approximately 10-30 inches per minute (4-13 millimetres per second); or
(ii) the optimal speed is approximately 800-1000 revolutions per minute.

5. The method according to any preceding claim, wherein the step of machining (303) the at least one feature into the metal sheet (401) with the end mill starting at the interior of the metal sheet (401) includes operating the end mill in a climbing pattern (907).

6. The method according to any preceding claim, wherein the metal sheet (401) includes or comprises a titanium alloy.

7. The method of any preceding claim further comprising stretch forming (305) the metal sheet (401) on a heated mandrel (1101; 1201) by circulating a working fluid through an interior portion of the mandrel (1101; 1201), heating the metal sheet (401) with the mandrel (1101; 1201), and controlling a rate at which the metal sheet (401) is stretched about the mandrel (1101; 1201).

8. The method according to claim 7 wherein the working fluid is oil.

9. The method according to claim 7 or claim 8, wherein:
(i) the working fluid is heated to approximately 177-204°C (350-400 degrees Fahrenheit); and/or
(ii) the step of controlling the rate of which the metal sheet (401) is stretched is configured to allow for heat transfer from the mandrel (1101; 1201) to the metal sheet as it is conformed to the mandrel (1101; 1201).

10. The method according to claim 8 or claim 9, wherein:
(i) the mandrel a solid piece mandrel (1101; 1201); or
(ii) the mandrel (1101; 1201) is a plurality of sections configured for assembly.

11. The method according to any of claims 8 to 10, wherein the mandrel (1101; 1201) is operably associated with a pump (1105) for circulating the working fluid.

12. The method according to any of claims 8 to 11, wherein the step of controlling the rate of which the metal sheet (401) is stretched is configured to control the strain rate applied to the metal sheet (401).

13. The method according to any of claims 8 to 12, wherein the steps of heating the metal sheet (401) and controlling the rate of which the metal sheet (401) is stretched are collectively configured to provide uniformity in metal movement of the metal sheet (401).

14. The method according to any of claims 8 to 13, wherein the steps of heating the metal sheet (401) and controlling the rate of which the metal sheet (401) is stretched are collectively configured to prevent stress build-up.

## Patentansprüche

1. Ein Verfahren zur Bearbeitung einer Eigenschaft an einem Metallblech (401), das Verfahren bestehend aus:
der Befestigung eines Metallblechs (401) mit einer Vakuumaufnahmevorrichtung (1001) zur Reduzierung von Schwingungen während der Bearbeitung, besagte Vakuumaufnahmevorrichtung (1001) schließt dabei ein Sockel-Teil (1003) ein, um das Metallblech (401) zu halten, das Verfahren ist **gekennzeichnet durch**:
ein erstes Ansaugen und die Aufrechterhaltung eines Vakuums über eine äußere periphere Dichtung (1005) am Sockel-Teil (1003), um das Metallblech (401) am Sockel-Teil (1003) zu befestigen; und dann
ein Ansaugen und die Aufrechterhaltung eines Vakuums **durch** ein inneres Gitter (1007) von eingelassenen Dichtungen des Sockel-Teils (1003), um die Innen-Teile des Metallblechs (401) am Sockel-Teil zu befestigen;
die Bearbeitung (303) mindestens einer Eigenschaft am Metallblech (401), wobei ein Schaftfräser im Innenbereich des Metallblechs (401) startet.

2. Das Verfahren gemäß Anspruch 1, wobei:
(i) die periphere Dichtung (1005) in das Sockel-Teil (1003) eingelassen ist; oder
(ii) die Vielzahl der eingelassenen Dichtungen (1007) in einem 45 Grad-Winkel zu normal platziert sind.

3. Das Verfahren gemäß eines der vorhergehenden Ansprüche, darüberhinaus bestehend aus:
der Berechnung einer optimalen Schneidenmenge (901) und Schneidengeometrie des Schaftfräsers, und optional oder vorzugsweise, wobei die Schneidenmenge fünf beträgt.

4. Das Verfahren gemäß eines der vorhergehenden Ansprüche, darüberhinaus bestehend aus:
der Berechnung (903) eines optimalen Vorschubs und einer optimalen Geschwindigkeit, bei der der Schaftfräser bei dem Bearbeitungsschritt (303) die mindestens eine Eigenschaft am Metallblech ausführt, und optional oder vorzugsweise wobei:
(i) der optimale Vorschub ungefähr 10-30 Zoll pro Minute (4-13 Millimeter pro Sekunde) beträgt; oder
(ii) die optimale Geschwindigkeit ungefähr 800-1000 Umdrehungen pro Minute beträgt.

5. Das Verfahren gemäß eines der vorhergehenden Ansprüche, wobei der Bearbeitungsschritt (303) der mindestens einen Eigenschaft am Metallblech (401), bei dem der Schaftfräser im Innenbereich des Metallblechs (401) startet, den Einsatz des Schaftfräsers in aufsteigendem Muster (907) einschließt.

6. Das Verfahren gemäß eines der vorhergehenden Ansprüche, wobei das Metallblech (401) eine Titanlegierung einschließt oder umfasst.

7. Das Verfahren eines der vorhergehenden Ansprüche, darüberhinaus bestehend aus dem Streckformen (305) des Metallblechs (401) auf einem erhitzten Haltedorn (1101; 1201) anhand der Durchleitung eines Arbeitsfluids durch einen Innen-Teil des Haltedorns (1101; 1201), dem Erhitzen des Metallblechs (401) mit dem Haltedorn (1101; 1201) und der Steuerung einer Frequenz, in der das Metallblech (401) über dem Haltedorn (1101; 1201) gestreckt wird.

8. Das Verfahren gemäß Anspruch 7, wobei das Arbeitsfluid Öl ist.

9. Das Verfahren gemäß Anspruch 7 oder Anspruch 8, wobei:
(i) das Arbeitsfluid auf ungefähr 177-204°C (350-400 Grad Fahrenheit) erhitzt wird; und/oder
(ii) der Schritt der Steuerung der Frequenz, in der das Metallblech (401) gestreckt wird, so gestaltet ist, dass eine Wärmeübertragung vom Haltedorn (1101; 1201) zum Metallblech stattfindet, damit die Wärme der des Haltedorns (1101; 1201) entspricht.

10. Das Verfahren gemäß Anspruch 8 oder Anspruch 9, wobei:
(i) der Haltedorn ein massiver Haltedorn (1101; 1201) ist; oder
(ii) der Haltedorn (1101; 1201) aus einer Vielzahl von Abschnitten, die für einen Zusammenbau konfiguriert sind, besteht.

11. Das Verfahren gemäß eines der Ansprüche 8 bis 10, wobei der Haltedorn (1101; 1201) betriebsfähig mit einer Pumpe (1105) verbunden ist, um das Arbeitsfluid hindurchzuleiten.

12. Das Verfahren gemäß eines der Ansprüche 8 bis 11, wobei der Schritt der Steuerung der Frequenz, in der das Metallblech (401) gestreckt wird, so gestaltet ist, dass die auf das Metallblech (401) angewendete Streckfrequenz gesteuert wird.

13. Das Verfahren gemäß eines der Ansprüche 8 bis 12, wobei die Schritte des Erhitzens des Metallblechs (401) und die Steuerung der Frequenz, in der das Metallblech (401) gestreckt wird, kollektiv so gestaltet sind, dass eine Einheitlichkeit in der Metallbewegung des Metallblechs (401) gegeben ist.

14. Das Verfahren gemäß eines der Ansprüche 8 bis 13, wobei die Schritte des Erhitzens des Metallblechs (401) und die Steuerung der Frequenz, in der das Metallblech (401) gestreckt wird, kollektiv so gestaltet sind, dass ein Spannungsaufbau verhindert wird.

## Revendications

1. Un procédé d'usinage d'une caractéristique dans une feuille métallique (401), le procédé comprenant :
la fixation de la feuille métallique (401) avec une monture à vide (1001) destinée à la réduction de vibrations au cours de l'usinage, ladite monture à vide (1001) comprenant un élément base (1003) destiné à soutenir la feuille métallique (401), le procédé étant **caractérisé par** :
en premier lieu, l'aspiration et le maintien d'un vide par l'intermédiaire d'un joint d'étanchéité périphérique extérieur (1005) de l'élément base (1003) de façon à fixer la feuille métallique (401) à l'élément base (1003), et ensuite
l'aspiration et le maintien d'un vide par l'intermédiaire d'une grille intérieure (1007) de joints d'étanchéité encastrés de l'élément base (1003) de façon à fixer des parties intérieures de la feuille métallique (401) à l'élément base,
l'usinage (303) d'au moins une caractéristique dans la feuille métallique (401) avec une fraise d'extrémité en commençant au niveau d'un intérieur de la feuille métallique (401).

2. Le procédé selon la Revendication 1, où :
(i) le joint d'étanchéité périphérique (1005) est encastré dans l'élément base (1003), ou
(ii) la pluralité de joints d'étanchéité encastrés (1007) sont placés à des angles de 45 degrés de la normale.

3. Le procédé selon l'une quelconque des Revendications précédentes, comprenant en outre :
le calcul d'une quantité de gorge optimale (901) et d'une géométrie de gorge de la fraise d'extrémité, et éventuellement ou de préférence où la quantité de gorge est approximativement de cinq.

4. Le procédé selon l'une quelconque des Revendications précédentes, comprenant en outre :
le calcul (903) d'une alimentation optimale et d'une vitesse optimale à laquelle la fraise d'extrémité doit fonctionner dans l'opération d'usinage (303) de la au moins une caractéristique dans la feuille métallique, et éventuellement ou de préférence où :
(i) l'alimentation optimale est approximativement de 10 à 30 pouces par minute (4 à 13 millimètres par seconde), ou
(ii) la vitesse optimale est approximativement de 800 à 1000 révolutions par minute.

5. Le procédé selon l'une quelconque des Revendications précédentes, où l'opération d'usinage (303) de la au moins une caractéristique dans la feuille métallique (401) avec la fraise d'extrémité en commençant au niveau de l'intérieur de la feuille métallique (401) comprend l'actionnement de la fraise d'extrémité selon un schéma ascendant (907).

6. Le procédé selon l'une quelconque des Revendications précédentes, où la feuille métallique (401) contient ou comprend un alliage de titane.

7. Le procédé selon l'une quelconque des Revendications précédentes comprenant en outre le formage par étirage (305) de la feuille métallique (401) sur un mandrin chauffé (1101, 1201) par la circulation d'un fluide de travail au travers d'une partie intérieure du mandrin (1101, 1201), le chauffage de la feuille métallique (401) avec le mandrin (1101, 1201) et la commande d'une vitesse à laquelle la feuille métallique (401) est étirée autour du mandrin (1101, 1201).

8. Le procédé selon la Revendication 7 où le fluide de travail est de l'huile.

9. Le procédé selon la Revendication 7 ou 8, où :
(i) le fluide de travail est chauffé à approximativement 177 à 204°C (350 à 400 degrés Fahrenheit), et/ou
(ii) l'opération de commande de la vitesse à laquelle la feuille métallique (401) est étirée est configurée de façon à permettre un transfert de chaleur du mandrin (1101, 1201) à la feuille métallique à mesure qu'elle est ajustée au mandrin (1101, 1201).

10. Le procédé selon la Revendication 8 ou 9, où :
(i) le mandrin est un mandrin d'un seul tenant (1101, 1201), ou
(ii) le mandrin (1101, 1201) est une pluralité de sections configurées de façon à être assemblées.

11. Le procédé selon l'une quelconque des Revendications 8 à 10, où le mandrin (1101, 1201) est associé opérationnellement à une pompe (1105) destinée à la circulation du fluide de travail.

12. Le procédé selon l'une quelconque des Revendications 8 à 11, où l'opération de commande de la vitesse à laquelle la feuille métallique (401) est étirée est configurée de façon à commander la vitesse de déformation appliquée à la feuille métallique (401).

13. Le procédé selon l'une quelconque des Revendications 8 à 12, où les opérations de chauffage de la feuille métallique (401) et de commande de la vitesse à laquelle la feuille métallique (401) est étirée sont collectivement configurées de façon à fournir une uniformité dans le déplacement de métal de la feuille métallique (401).

14. Le procédé selon l'une quelconque des Revendications 8 à 13, où les opérations de chauffage de la feuille métallique (401) et de commande de la vitesse à laquelle la feuille métallique (401) est étirée sont collectivement configurées de façon à empêcher une accumulation de contrainte.
